# EUROPÄISCHE PATENTSCHRIFT

(11) **EP 1 404 741 B1**
(45) Veröffentlichungstag und Bekanntmachung des Hinweises auf die Patenterteilung: **10.11.2004**
(21) Anmeldenummer: 02748813.9
(22) Anmeldetag: 24.06.2002
(51) Int. Cl.: C08G 65/20, B01J 21/16

(54) **KATALYSATOR UND VERFAHREN ZUR HERSTELLUNG VON POLYTETRAHYDROFURAN**
CATALYST AND METHOD FOR THE PRODUCTION OF POLYTETRAHYDROFURAN
CATALYSEUR ET PROCEDE DE PRODUCTION DE POLYTETRAHYDROFURANE

(30) Priorität: 26.06.2001 DE 10130782
(43) Veröffentlichungstag der Anmeldung: 07.04.2004
(73) Patentinhaber: BASF AKTIENGESELLSCHAFT, 67056 Ludwigshafen (DE)
(72) Erfinder: SCHLITTER, Stephan, 67117 Limburgerhof (DE); SIGWART, Christoph, 69198 Schriesheim (DE); DÖRFLINGER, Walter, 76684 Östringen (DE); HESSE, Michael, 67549 Worms (DE); FISCHER, Rolf-Hartmuth, 69121 Heidelberg (DE)
(74) Vertreter: Isenbruck, Günter, Dr.
(86) Internationale Anmeldenummer: PCT/EP2002/006962
(87) Internationale Veröffentlichungsnummer: WO 2003/002631

(56) Entgegenhaltungen:
- WO-A-02/02671
- WO-A-96/23833
- WO-A-99/36459
- DE-A- 19 601 861
- US-A- 4 228 272

## Beschreibung

Die vorliegende Erfindung betrifft einen Katalysator für die Herstellung von Polytetrahydrofuran, Polytetrahydrofuran-Copolymeren, Diestern oder Monoestern dieser Polymere durch die Polymerisation von Tetrahydrofuran in Gegenwart mindestens eines Telogens und/oder Comonomers.

Polytetrahydrofuran (im folgenden "PTHF"), auch Polyoxybutylenglykol genannt, ist in der Kunststoff- und Kunstfaserindustrie ein vielseitiges Zwischenprodukt und wird unter anderem als Diolkomponente zur Herstellung von Polyurethan-, Polyester- und Polyamid-Elastomeren verwendet. Daneben ist es -wie auch manche seiner Derivate- in vielen Anwendungsfällen ein wertvoller Hilfsstoff, z. B. als Dispergiermittel oder beim Entfärben ("Demken") von Altpapier.

PTHF wird technisch üblicherweise durch Polymerisation von Tetrahydrofuran (im folgenden "THF") an geeigneten Katalysatoren in Gegenwart von Reagentien hergestellt, deren Zugabe die Steuerung der Kettenlänge der Polymerketten und so die Einstellung des mittleren Molekulargewichts ermöglicht (Kettenabbruchreagentien oder "Telogene"). Die Steuerung erfolgt dabei durch Wahl von Art und Menge des Telogens. Durch Wahl geeigneter Telogene können zusätzlich funktionelle Gruppen an einem Ende oder beiden Enden der Polymerkette eingeführt werden.

So können z. B. durch Verwendung von Carbonsäuren oder Carbonsäureanhydriden als Telogene die Mono- oder Diester von PTHF hergestellt werden. Erst durch anschließende Verscifung oder Umesterung entsteht PTHF selbst. Daher wird diese Herstellung als zweistufiges PTHF-Verfahren bezeichnet.

Andere Telogene wirken nicht nur als Kettenabbruchreagenzien, sondern werden auch in die wachsende Polymerisatkette von PTHF eingebaut. Sie haben nicht nur die Funktion eines Telogens, sondern sind gleichzeitig ein Comonomer und können daher mit gleicher Berechtigung sowohl als Telogene wie auch als Comonomere bezeichnet werden. Beispiele für solche Comonomere sind Telogene mit zwei Hydroxygruppen, wie die Diole (Dialkohole). Dies können beispielsweise Ethylenglykol, Propylenglykol, Butylenglykol, 1,3-Propandiol, 1,4-Butandiol, 2-Butin- 1,4-diol, 1,6-Hexandiol oder niedermolekulares PTHF sein. Weiterhin sind als Comonomere cyclische Ether, wie 1,2-Alkylenoxide, z. B. Ethylenoxid oder Propylenoxid, 2-Methyltetrahydrofuran oder 3-Methyltetrahydrofuran geeignet. Die Verwendung solcher Comonomere führt mit Ausnahme von Wasser, 1,4-Butandiol und niedermolekularem PTHF zur Herstellung von Tetrahydrofuran-Copolymeren - im folgenden THF-Copolymere genannt- und ermöglicht es auf diese Weise, PTHF chemisch zu modifizieren.

Technisch läßt sich PTHF einstufig durch THF-Polymerisation mit Wasser, 1,4-Butandiol oder niedermolekularem PTHF als Telogen an sauren Katalysatoren herstellen. Als Katalysatoren sind sowohl homogene, im Reaktionssystem gelöste Systeme als auch heterogene, d. h. weitgehend ungelöste Systeme, bekannt. Nachteilig sind jedoch die relativ geringen THF-Umsätze, die vor allem bei der Synthese von PTHF des Molekulargewichts 650 bis 3000 erreicht werden.

Großtechnisch werden überwiegend die oben erwähnten zweistufigen Verfahren durchgeführt, bei denen THF z. B. in Gegenwart von Fluorsulfonsäure zunächst zu Polytetrahydrofuran-Estern polymerisiert und anschließend zu PTHF hydrolysiert wird. Üblicherweise werden bei dieser Form der THF-Polymerisation höhere THF-Umsätze als bei einstufigen Verfahren erzielt. Vorteilhaft ist vor allem die THF-Polymerisation in Gegenwart von Carbonsäureanhydriden oder Carbonsäureanhydrid/Carbonsäure-Gemischen, wie z. B. Acetanhydrid oder Acetanhydrid/Essigsäure-Gemische in Gegenwart saurer Katalysatoren zu PTHF-Acetaten und die anschließende Umesterung der PTHF-Acetate z. B. mit Methanol zu PTHF und Methylacetat.

Die in der Anmeldung bevorzugte Herstellung von PTHF durch THF-Polymerisation in Gegenwart von Carbonsäureanhydriden und/oder Carbonsäureanhydrid/Carbonsäure-Gemischen bzw. die Herstellung von THF-Copolymeren durch THF-Polymerisation in Gegenwart von Carbonsäureanhydriden und/oder Carbonsäureanhydrid/Carbonsäure-Gemischen und cyclischen Ethern als Comonomeren an festen sauren Katalysatoren ist bekannt.

In der DE-A-198 01 462 werden säureaktivierte Calcium-Montmorillonite mit einer spezifischen Oberfläche von >300 m²/g, einer Acidität von >0,02 mmol/g für pKs-Werte< - 3 und Porenvolumina von >0,4 cm³/g für Porengrößen im Bereich von 30 - 200 A als Katalysatoren in Pulver- oder Strangform für die THF-Polymerisation zu u. a. PTHF-Diacetaten beschrieben.

Die US-A-4,228,462 beschreibt eine Methode zur Herstellung von Copolymeren aus THF und Alkylenoxiden an säureaktivierten Montmorilloniten mit Porenvolumina von 0.4 - 0.8 cm³/g, durchschnittlichen Porengrößen im Bereich von 0.1 - 0,3 µm und einer Oberfläche von 220 - 260 m²/g. Beschrieben wird eine kontinuierliche Herstellung in Suspension, wobei der Katalysator in Pulverform eingesetzt wird.

Gemäß der DE-C2-195 13 493 werden zur Herstellung von Polytetramethylenetherglykoldiester kalcinierte Magnesium-Aluminium-Hydrosilikate vom Attapulgit- oder Sepiolit-Typ als Katalysator eingesetzt. Die Verwendung dieser Katalysatoren anstelle der bekannten Montmorillonit-, Zeolith- oder Kaolinkatalysatoren soll zu höheren Polymerisationsgeschwindigkeiten, gleichmäßigeren Eigenschaften und einer Molekulargewichtsverteilung der erhaltenen Polymerisate führen.

Die japanische Offenlegungsschrift JP-A-11-292958 beschreibt ein Verfahren zur kontinuierlichen Herstellung von PTHF-Diestem mit verbesserter Molekulargewichtsverteilung. Das Verfahren wird an einem festen sauren anorganischen Katalysator in Suspension betrieben. Als Katalysatoren werden solche des Typs Zirkoniumoxid/Siliciumdioxid bzw. des Bleicherde-Typs genannt, mit Katalysator-Partikeln von <3 mm.

In der WO-A-94/05719 werden neben amorphen Aluminiumsilikaten auch säureaktivierter und kalcinierter Kaolin oder Zeolithe als Katalysatoren zur Herstellung von PTHF-Dicarbonsäureestern mit enger Molgewichtsverteilung durch THF-Polymerisation im Festbett in Gegenwart von Carbonsäureanhydriden genannt.

Die genannten Verfahren zeigen generell, daß die verwendeten Polymerisationskatalsatoren auf der Basis von Schichtsilikaten zwar in Pulverform, d. h. bei Suspensionsfahrweise, eine hohe Katalysatoraktivität entfalten. Bei der an sich bevorzugten Herstellungsweise im Fließbett- oder Festbett, die gegenüber der Suspensionsfahrweise Vorteile bei der Katalysatorabtrennung bietet, zeigen die beschriebenen Katalysatoren als Formkörper dagegen eine stark reduzierte Aktivität. Die Wirtschaftlichkeit eines heterogen-katalysierten PTHF-Verfahrens hängt aber entscheidend von der Produktivität des Katalysators ab.

Der vorliegenden Erfindung lag daher die Aufgabe zugrunde, einen Katalysator für die Herstellung von Polytetrahydrofuran, Polytetrahydrofuran-Copolymeren, Diestem oder Monoestern dieser Polymere bereitzustellen, der leicht abtrennbar ist und gleichzeitig insbesondere beim Einsatz im Fließbett oder Festbett eine hohe Produktivität zeigt.

Die Aufgabe wird erfindungsgemäß durch einen Katalysator gelöst, der in Form von Formkörpern oder Partikeln vorliegt, die ein Volumen von mindestens 0,05 mm³, bevorzugt von mindestens 0,2 mm³ und besonders bevorzugt von mindestens 1 mm³ aufweisen. Weiterhin weist der Katalysator die beiden Merkmale a) und b) auf:
a) Porenradienverteilung des Katalysators, die mindestens ein Maximum der Porenverteilung im Bereich von 100 - 5000 A Porenradius zeigt;
b) Porenvolumen von Katalysatorporen mit Radien von 200 bis 3000 A größer als 0,05 cm³/g, bevorzugt größer als 0,075 cm³/g und/oder einem Porenvolumen von Katalysatorporen mit Radien von 200 bis 5000 A größer als 0,075 cm³/g, bevorzugt größer als 0,1 cm³/g und/oder einem Porenvolumen von Katalysatorporen mit einem Radius von >200 A größer als 0,1 cm³/g, bevorzugt größer als 0,15 cm³/g.

Durch ein Volumen des einzelnen Katalysatorformkörpers oder -partikels von zumindest 0,05 mm³ wird in günstiger Weise eine einfache Abtrennung des Katalysators vom Polymer ermöglicht, z. B. durch Dekantieren und/oder Filtrieren bei Suspensionsfahrweise oder bei dem Einsatz in einem Fließ- oder Festbett.

Gemäß einer weiteren bevorzugten Ausführungsform werden 50 % des Gesamtporenvolumens von Poren mit einem Durchmesser von <0,1 µm gebildet.

Die Herstellung von Katalysator-Formkörpern aus pulverförmigen Rohstoffen kann durch dem Fachmann bekannte Methoden wie beispielsweise Tablettierung, Agglomeration oder Extrusion erfolgen, wie sie u.a. im Handbook of Heterogenous Catalysis, Vol. 1, VCH Verlagsgesellschaft Weinheim, 1997, S. 414-417 beschrieben sind. Bei der Verformung können dem Fachmann bekannte Hilfsstoffe wie Binder, Schmierstoffe und/oder Lösungsmittel zugesetzt werden. Bevorzugt ist die Formgebung durch Agglomeration oder Extrusion in Gegenwart von Wasser als Hilfsstoff.

Als Rohstoffe für die erfindungsgemäßen Katalysatorformkörper der oben genannten Porenstruktur können Katalysatoren in Pulverform verwendet werden, die die THF-Polymerisation in Gegenwart von Carbonsäureanhydriden bzw. Carbonsäureanhydrid/Carbonsäure-Gemischen und/oder cyclischen Ethem initiieren. Bevorzugt sind Katalysator-Rohstoffe, die eingesetzt in Pulverform in einem standardisierten Polymerisationsversuch eine ausreichende Anfangsproduktivität zeigen. Unter Anfangsproduktivität wird die Produktivität des Katalysators bei vemachlässigbar geringen THF-Umsätzen verstanden, wie sie beispielsweise aus einem diskontinuierlichen Polymerisationsexperiment, welches in den Beispielen beschrieben ist, ermittelt werden kann. Diese Anfangsproduktivität des Katalysator-Rohstoffs in Pulverform beträgt zumindest 0,5 g PTHF oder PTHF-Derivat pro g Katalysatorpulver und Stunde Reaktionszeit, bevorzugt sind Rohstoffe mit mindestens 1 g/g*h und besonders bevorzugt Rohstoffe mit mindestens 2,5 g/g*h.

Die erfindungsgemäßen Katalysatorformkörper sind nicht beschränkt auf Katalysatoren, die durch Formgebung von Aktivmassen hergestellt werden. Das erfindungsgemäße Verfahren kann ebenso mit Katalysatoren durchgeführt werden, bei denen ein nicht oder nur gering polymerisationsaktiver Formkörper durch weitere Behandlung in einen erfindungsgemäßen Katalysator umgesetzt wird. Beispiele hierfür sind als Formkörper aktivierte Bleicherden oder durch Imprägnieren, Tränken oder Beschichten von Trägermaterialien erhaltene Mischoxid-Katalysatoren. Die erfindungsgemäßen Katalysatoren nach dieser Ausführungsform zeigen ebenfalls eine Pulveraktivität von mindestens 0,5 g PTHF oder PTHF-Derivat pro g Katalysatorpulver und Stunde Reaktionszeit, bevorzugt 1 g/g*h und besonders bevorzugt 2,5 g/g*h. Die Messung dieser Anfangsaktivität kann beispielsweise an einer durch Vermahlen des Formkörpers zu Pulver erhaltenen Probe erfolgen oder durch Messung an einem chemisch-physikalisch analogen Material in Pulverform.

Als aktive Katalysatormasse werden dem Fachmann bekannte, saure Feststoffe verwendet. Erfindungsgemäß ist die Verwendung von Schichtsilikaten bevorzugt. Bevorzugte Schichtsilikate sind solche der Montmorillonit-Saponit-Gruppe, Kaolin-Serpentin-Gruppe oder Palygorskit-Sepiolith-Gruppe, besonders bevorzugt Montmorillonite, Hectorite, Kaoline, Attapulgite oder Sepiolithe, wie sie beispielsweise in Klockmanns Lehrbuch der Mineralogie, 16. Auflage, F. Euke Verlag 1978, Seiten 739 - 765 beschrieben werden, verwendet.

Vor dem Einsatz im erfindungsgemäßen Verfahren werden die Schichtsilikat-Katalysatoren vorzugsweise in Säure aktiviert. Die Aktivierung kann nach Verfahren erfolgen, deren Grundzüge beispielsweise in US-A-1,642,871 oder der in EP-A-0 398 636 zitierten Literatur beschrieben sind. Die Säureaktivierung kann mit verschiedenen Säuren erfolgen, bevorzugt sind die üblichen Mineralsäuren oder organische Carbonsäuren. Bevorzugt sind die Säuren ausgewählt aus der Gruppe bestehend aus Salzsäure, Schwefelsäure, Salpetersäure, Phosphorsäure, Ameisensäure, Essigsäure oder Citronensäure. Besonders bevorzugt sind Schwefelsäure und/oder Salzsäure.

Für die Säureaktivierung kann das Schichtsilikat beispielsweise in Pulverform in Säure suspendiert und unter bekannten Bedingungen umgesetzt und aktiviert werden. Auf diese Weise wird ein aktiver Katalysator-Rohstoff in Pulverform erhalten. Um anhaftende Säurespuren zu entfernen, kann anschließend mit destilliertem oder deionsiertem Wasser gewaschen und dann getrocknet oder kalziniert werden. Die Trocknung der Schichtsilikat-Katalysatoren erfolgt zweckmäßigerweise bei normalem Druck und Temperaturen von 80 bis 200°C, bevorzugt 100 bis 150°C, für 1 bis 20 Stunden. Es kann auch bei vermindertem Druck und niedrigeren Temperaturen getrocknet werden.

Die Säurcaktivierung kann aber auch auf eine andere, an sich bekannte Weise erfolgen. Beispielsweise kann die Säure durch Versprühen oder Verkneten unter gleichzeitiger Verformung mit dem Schichtsilikat in Kontakt gebracht werden, wie dies beispielsweise die WO-A-99/39820 offenbart.

Eine Kalzinierung der Katalysatoren erfolgt vorzugsweise bei einer Temperatur von 150 bis 900°C, besonders bevorzugt bei 200 bis 700°C, insbesondere bei 300 bis 500°C für einen Zeitraum von 0,1 bis 12 Stunden, vorzugsweise 1 bis 5 Stunden. Es können sowohl pulverförmige Katalysatorrohrstoffe, also auch bevorzugt Katalysatorformkörper calciniert werden.

Die erfindungsgemäße Porosität des Katalysators wird mit dem Fachmann bekannten Methoden erreicht. Dies sind beispielsweise der Zusatz von Porenbildnern (Carbonsäuren, Nitrate, Ammoniumsalze, Guanidiniumsalze, Urotropin, Eiweiße, Kohlenhydrate oder modifizierte Kohlenhydrate wie z. B. Methylzellulose), anorganischen Zuschlagstoffen (Metalloxide, Tonmineralien) wie sie etwa in der DE-A-196 01 861 genannt sind, Wahl einer geeigneten Teilchengrößenverteilung des Katalysatorpulvers, Vorbehandlung des Katalysatorpulvers, z. B. Vorkalcinieren oder Mahlen vorkalcinierter Formkörper und/oder geeignete Verfahrensparameter bei der Herstellung des Formkörpers, beispielsweise geringes Verdichten des Pulvers im Verformungsschritt.

Als Porenbildner und Hilfs- und/oder Zuschlagstoffe sind solche bevorzugt, die wenig lösliche Alkalimetalle und andere, die katalytische Wirksamkeit beeinträchtigende Bestandteile enthalten und/oder bei Temperaturbehandlung und/oder unter den Reaktionsbedingungen bilden. Besonders bevorzugt sind aus dieser Kategorie Ammoniumnitrat, Siliciumdioxide, Aluminiumoxide und Tonminerale. Die Porosität kann sowohl bei der Herstellung der Katalysator-Formkörper aus Aktivmassen als auch bei der Herstellung nicht oder wenig aktiver Formkörper, die anschließend einer Aktivierung unterzogen werden, eingestellt werden.

Die erfindungsgemäß verwendbaren Katalysatoren können für die Polymerisation z. B. in Form von Zylindern, Strängen, Rippsträngen, Kugeln, Ringen oder Splitt eingesetzt werden.

Als Vorbehandlung des Katalysators kommen beispielsweise das Trocknen mit auf 80 bis 200°C, bevorzugt auf 100 bis 150°C erwärmten Gasen, wie z. B. Luft oder Stickstoff, in Frage.

Als Telogene eignen sich bei der Herstellung von PTHF-Estern Carbonsäureanhydride und/oder Carbonsäureanhydrid/Protonensäure-Gemische. Die Protonensäuren sind bevorzugt organische und anorganische Säuren, die im Reaktionssystem löslich sind. Beispiele für organische Säuren sind Carbonsäuren und Sulfonsäuren. Beispiele für anorganische Säuren sind Schwefelsäure, Salzsäure, Phosphorsäure.

Vorzugsweise werden organische Carbonsäuren oder deren Anhydride verwendet. Unter diesen sind aliphatische und aromatische Poly- und/oder Monocarbonsäurcn, die 2 bis 12, bevorzugt 1 bis 8 Kohlenstoffatome enthalten, bevorzugte Beispiele für aliphatische Carbonsäuren sind Essigsäure, Milchsäure, Propionsäure, Valeriansäure, Capronsäure, Caprylsäure und Pelargonsäure. Beispiele für aromatische Carbonsäuren sind Phthalsäure- und Naphthalincarbonsäure. Beispiele für Anhydride von aliphatischen Polycarbonsäuren sind Bernsteinsäure- und Maleinsäureanhydrid. Insbesondere ist Essigsäureanhydrid bevorzugt.

Die bei der Verwendung der bevorzugten Telogene entstehenden PTHF-Acetate lassen sich mit verschiedenen Verfahren in PTHF überführen (z. B. wie in der US-A-4,460,796 angegeben).

Andere Copolymere von THF lassen sich herstellen durch die zusätzliche Verwendung von cyclischen Ethern als Comonomere, die sich ringöffnend polymerisieren lassen, bevorzugt drei-, vier- und fünfgliedrige Ringe, wie 1,2-Alkylenoxide, z. B. Ethylenoxid oder Propylenoxid, Oxetan, substituierte Oxetane, wie 3,3-Dimethyloxetan, die THF-Derivate 2-Methyltetrahydrofuran oder 3-Methyltetrahydrofuran, wobei 2-Methyltetrahydrofuran oder 3-Methyltetrahydrofuran besonders bevorzugt sind.

Das Telogen und gewünschtenfalls das Comonomer wird zweckmäßigerweise in THF gelöst der Polymerisation zugeführt. Da das Telogen zum Kettenabbruch bzw. zur Kettenübertragung in der Polymerisation führt, läßt sich über die eingesetzte Telogenmenge das mittlere Molekulargewicht des Polymers steuern. Je mehr Telogen im Reaktionsgemisch enthalten ist, desto niedriger wird das mittlere Molekulargewicht des PTHF oder des betreffenden PTHF-Derivates. Je nach Telogengehalt der Polymerisationsmischung können PTHF, die betreffenden PTHF-Derivate bzw. THF-Copolymere mit mittleren Molekulargewichten von 250 bis 10000 Dalton gezielt hergestellt werden. Vorzugsweise werden mit dem erfindungsgemäßen Verfahren PTHF, die betreffenden PTHF-Derivate bzw. THF-Copolymere mit mittleren Molekulargewichten von 500 bis 5000 Dalton, besonders bevorzugt von 650 bis 4000 Dalton hergestellt.

Die Polymerisation wird im allgemeinen bei Temperaturen von 0 bis 80°C, vorzugsweise von 25°C bis zur Siedetemperatur des THF, durchgeführt. Der angewandte Druck ist in der Regel für das Ergebnis der Polymerisation nicht kritisch, weshalb im allgemeinen bei Atmosphärendruck oder unter dem Eigendruck des Polymerisationssystems gearbeitet wird. Ausnahmen hiervon bilden Copolymerisationen von THF mit den leichtflüchtigen 1,2-Alkylenoxiden, die vorteilhafterweise unter Druck ausgeführt werden. Üblicherweise beträgt der Druck 0,1 bis 20 bar, bevorzugt 0,5 bis 2 bar.

Zur Vermeidung der Bildung von Etherperoxiden wird die Polymerisation vorteilhaft unter einer Inertgasatmosphäre vollzogen. Als Inertgase können z. B. Stickstoff, Kohlendioxid oder die Edelgase dienen, bevorzugt wird Stickstoff verwendet.

Besonders vorteilhaft ist die Ausführung der Polymerisation unter einer Wasserstoffatmosphäre. Diese Ausführungsform bewirkt eine besonders niedrige Farbzahl der entstehenden Polymerisate. Der Wasserstoffpartialdruck kann dabei zwischen 0,1 und 50 bar gewählt werden. Durch Dotierung des Polymerisationskatalysators mit Übergangsmetallen oder Mischen des Polymerisationskatalysators mit einem übergangsmetallhaltigen Katalysator kann bei einer Durchführung der Polymerisation in Gegenwart von Wasserstoff die Farbzahl noch weiter verbessert werden. Als Übergangsmetalle dienen die Elemente der Gruppen 7 bis 10 des Periodensystems, beispielsweise Ruthenium, Rhenium, Nickel, Eisen, Kobalt, Palladium und/oder Platin.

Das erfindungsgemäße Verfahren kann diskontinuierlich oder kontinuierlich betrieben werden, wobei aus wirtschaftlichen Gründen in der Regel die kontinuierliche Betriebsweise bevorzugt wird.

Bei der diskontinuierlichen Betriebsweise werden die Reaktanden THF, das betreffende Telogen und/oder gewünschtenfalls das Comonomer und der Katalysator im allgemeinen in einem Rührkessel oder Schlaufenreaktor bei den angegebenen Temperaturen solange umgesetzt, bis der gewünschte Umsatz des THF erreicht ist. Die Reaktionsszeit kann in Abhängigkeit von der zugesetzten Katalysatormenge 0,5 bis 40, vorzugsweise 1 bis 30 Stunden betragen. Die Katalysatoren werden zur Polymerisation im allgemeinen in einer Menge von 1 bis 90 Gew. % , vorzugsweise von 4 bis 70 Gew. %, und besonders bevorzugt von 8 bis 60 Gew. %, bezogen auf das Gewicht des eingesetzten THF, zugesetzt.

Bei der kontinuierlichen Betriebsweise kann die Umsetzung in herkömmlichen, für kontinuierliche Verfahren geeigneten Reaktoren oder Reaktoranordnungen in Suspensions- oder Festbettfahrweise ausgeführt werden, bei Suspensionsfahrweise beispielsweise in Schlaufenreaktoren oder Rührreaktoren und bei Festbettfahrweise in Rohrreaktoren oder Festbettreaktoren, wobei die Festbettfahrweise bevorzugt ist.

In der bevorzugten Festbettfahrweise kann der Polymerisationsreaktor in Sumpffahrweise, d. h. das Reaktionsgemisch wird von unten nach oben geführt, oder in Rieselfahrweise, d. h. das Reaktionsgemisch wird von oben nach unten durch den Reaktor geführt, betrieben werden. Das Eduktgemisch (Feed) aus THF und Telogen und/oder Comonomer wird dem Polymerisationsreaktor kontinuierlich zugeführt, wobei die Katalysatorbelastung 0,01 bis 2,0 kg THF/(1*h), bevorzugt 0,02 bis 1,0 kg THF/(1*h) und besonders bevorzugt 0,04 bis 0,5 kg THF/(1*h)beträgt.

Weiterhin kann der Polymerisationsreaktor im geraden Durchgang, d. h. ohne Produktrückführung, oder im Umlauf, d. h. ein Teil des den Reaktor verlassenden Polymerisationsgemischs wird im Kreislauf geführt, betrieben werden. Bei der Umlauffahrweise beträgt das Verhältnis von Umlauf zu Zulauf kleiner oder gleich 100 : 1, bevorzugt kleiner 80 : 1 und bevorzugt kleiner 60 : 1.

Die Konzentration des als Telogen eingesetzten Carbonsäureanhydrids in dem dem Polymerisationsreaktor zugeführten Eduktgemisch (Feed) liegt zwischen 0,03 bis 30 mol%, bevorzugt bei 0,05 bis 20 mol%, besonders bevorzugt bei 0,1 bis 10 mol%, bezogen auf das eingesetzte THF.

Wird zusätzlich eine Carbonsäure verwendet, so beträgt das Molverhältnis im Feed üblicherweise 1: 20 bis 1 : 20000, bezogen auf eingesetztes Carbonsäureanhydrid.

Werden zusätzlich Comonomere verwendet, so beträgt das Molverhältnis im Feed üblicherweise 0,1 bis 50, bevorzugt 0,5 bis 40, besonders bevorzugt 1 bis 30 mol%, bezogen auf eingesetztes THF.

Wurde die Polymerisation in Suspensionsfahrweise durchgeführt, ist es zur Aufarbeitung des Polymerisationsaustrags erforderlich, den überwiegenden Teil des Polymerisationskatalysator beispielsweise durch Filtration, Dekantieren oder Zentrifugieren vom Polymerisationsgemisch abzutrennen und den erhaltenen Polymerisationsaustrag der weiteren Aufarbeitung zuzuführen. In der bevorzugten Festbettfahrweise wird der Polymerisationsaustrag direkt weiter aufgearbeitet.

Die Aufarbeitung der besonders bevorzugten PTHF-Acetate bzw. THF-Copolymer-Acetate kann nach an sich bekannten Methoden erfolgen. Beispielsweise wird nach destillativer Abtrennung von nicht umgesetztem THF und gegebenenfalls Essigsäureanhydrid, Essigsäure und Comonomer das erhaltene PTHF-Acetat bzw. THF-Copolymer-Acetat basenkatalysiert mit Methanol zu PTHF bzw. THF-Copolymer und Methylacetat umgeestert.

Gewünschtenfalls kann anschließend niedermolekulares PTHF und/oder Tetrahydrofurancopolymer eines mittleren Molekulargewichts von 200 bis 700 Dalton destillativ abgetrennt werden. Üblicherweise können hierbei auch niedermolekulare cyclische Oligomere destillativ abgetrennt werden. Als Destillationsrückstand verbleibt PTHF bzw. THF-Copolymer mit mittleren Molekulargewichten von 650 bis 10.000 Dalton.

Die erfindungsgemäßen Katalysatoren können nach Einsatz in einem diskontinuierlich oder kontinuierlich betriebenen PTHF-Verfahren regeneriert werden, beispielsweise durch Temperaturbehandlung, wie in der EP-A-0 535 515 beschrieben, und/oder durch Waschen des Katalysators mit wäßrigen und/oder organischen Lösungsmitteln.

Im folgenden wird die Erfindung anhand von Beispielen näher erläutert.

### I. Analytische Untersuchungen der Katalysatoren

Die Porosität und Porenvolumenverteilung der Katalysatoren wurde durch Quecksilberintrusion gemäß DIN 66133 bestimmt. Die Daten wurden im Porenradienbereich von 20A bis 10µm ausgewertet. Angaben zu Maxima in der Porenradienverteilung beziehen sich auf eine logarithmische Darstellung des Porenradius.

### II. Bestimmung der Anfangsaktivität des Katalysators in Pulverform

In einem 250 ml-Kolben werden 200 g Tetrahydrofuran und 20 g Essigsäureanhydrid vorgelegt und auf 50° C erwärmt. Unter intensivem Rühren werden 5 g bei 120° C getrockneter, fein gepulverter Katalysator mit Korngrößen < 100 µm hinzugefügt und die Reaktionsmischung weiter bei 50° C intensiv gerührt. Nach 45 min, 2h, 4h und 6h werden jeweils 20 ml der Reaktionsmischung entnommen und zügig vom Katalysatorpulver durch Filtration abgetrennt. Die vom Katalysator befreiten Proben werden auf ihren Gehalt an PTHF-Diacetat untersucht, z. B. durch destillative Abtrennung der Leichtsieder und Auswiegen des PTHF-Diacetats. Durch Auswertung der zeitlichen Abhängigkeit der PTHF-Diacetat-Bildung wird über Extrapolation die Anfangsproduktivität des Katalysator-Pulvers bestimmt.

### III. Aktivitätsbestimmung der Katalysator-Formkörper

Ein 120 ml-Rohrreaktor in Doppelmantel-Ausführung zur Temperierung und mit Umlauf wurde mit 100 ml getrockneten Katalysator-Formkörpern befüllt, die zuvor bei 150° C 24 Stunden lang getrocknet worden waren. Anschließend wurde unter Schutzgas bei 50°C (gemessen im Umlaufthermostaten für den Doppelmantel) eine Mischung aus 200 g Tetrahydrofuran und 20 g Essigsäureanhydrid bei einer Umlaufmenge von 1 1/h über die Katalysatorschüttung gepumpt. Nach 15, 30, 45, 60, 90 und 120 min wurden dem Reaktionsgemisch Proben entnommen, die auf ihren Polymergehalt untersucht wurden (siehe unter II.). Durch Auswertung der zeitlichen Abhängigkeit der PTHF-Diacetat-Bildung wurde durch Extrapolation die Anfangsproduktivität der Katalysator-Formkörper bestimmt.

Die beschriebenen Beispiele zur Aktivitätsbestimmung lassen sich bezüglich Art und Menge der Telogene und/oder Comonomere, Temperatur, Druck etc. leicht an die jeweiligen Einsatzbedingungen des Katalysators anpassen. Durch Variation von Katalysatormengen und Reaktionszeiten ist weiterhin eine Anpassung der Experimente an verschieden hohe Anfangsaktivitäten leicht möglich.

### Beispiel A:

### Vergleichskatalysator

350 g eines säureaktivierten Schichtsilikats (Bleicherde K10, Fa. Südchemie) mit einer Pulveraktivität von 7,8 g/g*h wurde in einem Laborkneter mit 225 ml Wasser für 2,5 Stunden intensiv verknetet, anschließend zu Strängen mit einem Durchmesser von 2,5 mm und einer mittleren Länge von 10 mm extrudiert, getrocknet und bei 350°C kalciniert. Die Porenradienverteilung (Hg-Porosimetrie) dieses Katalysators zeigt im Bereich > 20 Å Porenradius kein erkennbares Maximum, die Porosität im Bereich der Porenradien von 200A - 3000A liegt bei 0,035 cm³/g. Die Aktivität der Formkörper dieses Vergleichskatalysators dient als Referenz für die anderen Katalysatoren.

### Beispiel B:

### Erfindungsgemäßer Katalysator 1

350 g eines säureaktivierten Schichtsilikats (Bleicherde K10, Fa. Südchemie) mit einer Pulveraktivität von 7,8 g/g*h wurde in einem Laborkneter mit 260 ml Wasser für 26 min intensiv verknetet, anschließend zu Strängen mit einem Durchmesser von 2,5 mm und einer mittleren Länge von 10 mm extrudiert, getrocknet und bei 350°C kalciniert. Die Porenradienverteilung (Hg-Porosimetrie) dieses Katalysators ist bimodal mit Maxima im Bereich von 60 Å und 1000 Å Porenradius, die Porosität im Bereich der Porenradien von 200A - 3000A liegt bei 0,15 cm³/g. Die Aktivität der Formkörper dieses Katalysators beträgt das ca. 2,9-fache des Vergleichskatalysators aus Beispiel A.

### Erfindungsgemäßer Katalysator 2

387 g eines säureaktivierten Schichtsilikats (Bleicherde K10, Fa. Südchemie) mit einer Pulveraktivität von 7,8 g/g*h wurden zunächst bei 300°C vorkalciniert, dann in einem Laborkneter mit 300 ml Wasser für 25 Minuten intensiv verknetet, anschließend zu Strängen mit einem Durchmesser von 2,5 mm und einer mittleren Länge von 10 mm extrudiert, getrocknet und schließlich bei 350°C kalciniert. Die Porenradienverteilung (Hg-Porosimetrie) dieses Katalysators ist bimodal mit einem schwach ausgeprägten Maximum im Bereich 20 bis 100 Å und einem deutlichen Maximum bei 3000 Å Porenradius. Die Porosität im Bereich der Porenradien von 200 - 3000 Å liegt bei 0,32 cm³/g. Die Aktivität der Formkörper dieses Katalysators beträgt das ca. 4,9-fache des Vergleichskatalysators aus Beispiel A.

### IV. Kontinuierliche Polymerisation von THF zu pTHF-Diacetat

### Beispiel C:

### Vergleichskatalysator

In einer Laborapparatur wurde unter Schutzgas eine Mischung aus THF und Essigsäureanhydrid (6,9 % bezogen auf Gesamt-Feed) bei 45°C über den bei 140°C vorgetrockneten Vergleichskatalysator aus Beispiel A geleitet, der in einem 250 ml-Reaktor (Innendurchmesser 40 mm) als Festbett angeordnet war. Die Katalysatorbelastung betrug 0,2 kg Feed / (1(kat.*h). Der Reaktor wurde mit Produktrückführung (1 l/h) betrieben. Zur Aufarbeitung des PTHF-Diacetats wurde das anfallende Reaktionsgemisch destillativ von nichtumgesetztem THF und Essigsäureanhydrid befreit. Die Eindampfrate betrug 36 %, das Molekulargewicht des pTHF-Diacetats Mn betrug 760 g/mol.

### Beispiel D:

### Erfindungsgemäßter Katalysator 3

300 g eines säureaktivierten Schichtsilikat (Bleicherde K10, Fa. Südchemie) mit einer Pulveraktivität von 5,4 g/g*h wurden zunächst bei 300°C vorkalciniert, dann in einem Laborkneter mit 190 ml Wasser für 25 min intensiv verknetet, anschließend zu Strängen mit einem Durchmesser von 2,5 mm und einer mittleren Länge von 10 mm extrudiert, getrocknet und schließlich bei 350°C kalciniert. Die Porenradienverteilung (Hg-Porosimctrie) dieses Katalysators ist bimodal mit einem schwach ausgeprägten Maximum im Bereich 20 bis 100 Å und einem deutlichen Maximum bei 3000 Å Porenradius. Die Porosität im Bereich der Porenradien von 200 - 3000 Å liegt bei 0,27 cm³/g.

In einer Laborapparatur wurde unter Schutzgas eine Mischung aus THF und Essigsäureanhydrid (6,9 % bezogen auf Gesamt-Feed) bei 45°C über diesen bei 140°C vorgetrockneten Katalysator geleitet, der in einem 250 ml-Reaktor (Innendurchmesser 40 mm) als Festbett angeordnet war. Die Katalysatorbelastung betrug 0,2 kg Feed / (1 Kat.*h). Der Reaktor wurde mit Produktrückführung (1 l/h) betrieben. Zur Aufarbeitung des PTHF-Diacetats wurde das anfallende Reaktionsgemisch destillativ von nichtumgesetztem THF und Essigsäureanhydrid befreit. Die Eindampfrate betrug 51 %, das Molekulargewicht des PTHF-Diacetats Mn betrug 960 g/mol.

## Patentansprüche

1. Katalysator für die Herstellung von Polytetrahydrofuran, Polytetrahydrofuran-Copolymeren, Diestern oder Monoestern dieser Polymere durch Polymerisation von Tetrahydrofuran in Gegenwart mindestens eines Telogens und/oder Comonomers, wobei dieser in Form von Katalysatorformkörpern oder Katalysatorpartikeln mit einem Volumen des einzelnen Formkörpers oder Partikels von mindestens 0,05 mm³, vorzugsweise mindestens 0,2 mm³, insbesondere 1mm³, vorliegt und wobei dieser Katalysator die beiden Merkmale a) und b) aufweist:
a) Porenradienverteilung mit mindestens einem Maximum der Porenverteilung im Bereich von 100 - 5000 A Porenradius,
b) Porenvolumen von Katalysatoiporen mit Radien von 200 - 3000 A größer als 0,05 cm³/g und/oder Radien von 200 - 5000 A größer als 0,075 cm³/g und/oder einem Radius von > 200 A größer als 0,1 cm³/g.

2. Katalysator nach Anspruch 1, **dadurch gekennzeichnet, daß** 50 % des Gesamtporenvolumens von Poren mit einem Durchmesser von < 0,1 µm gebildet werden.

3. Katalysator nach Anspruch 1 oder 2, **dadurch gekennzeichnet, dass** er aus einem Katalysatorvorläufer in Pulverform hergestellt wird.

4. Katalysator nach einem der Ansprüche 1 bis 3, **dadurch gekennzeichnet, dass** der Katalysatorvorläufer in Pulverform oder der pulverisierte Katalysator eine Anfangsaktivität von mindestens 0,5 g Polymer/g Katalysator und Stunde Reaktionszeit aufweist.

5. Katalysator nach einem der Ansprüche 1 bis 4, wobei die aktive Katalysatormasse ausgewählt ist aus Schichtsilikaten, bevorzugt aus Schichtsilikaten der Montmorillonit-Saponit-Gruppe, Kaolin-Serpentin-Gruppe oder Palygorskit-Sepiolith-Gruppe, besonders bevorzugt aus Montmorillonit, Hectorit, Kaolin, Attapulgit, Sepiolith oder Mischungen davon.

6. Verfahren zur Herstellung eines Katalysators nach einem der Ansprüche 1 bis 5, **dadurch gekennzeichnet, dass** die Herstellung der Katalysator-Formkörper aus pulverformigen Rohstoffen durch an sich bekannte Methoden, vorzugsweise Tablettierung, Agglomeration oder Extrusion erfolgt, wobei bei der Verformung Hilfsstoffe , vorzugsweise Binder, Schmierstoffe und/oder Lösungsmittel zugesetzt werden, insbesondere die Formgebung durch Agglomeration oder Extrusion in Gegenwart von Wasser als Hilfsstoff erfolgt.

7. Verfahren zur Herstellung von Polytetrahydrofuran, Polytetrahydrofurancopolymeren, Diestern oder Monoestern dieser Polymere, **dadurch gekennzeichnet, dass** Tetrahydrofuran in Gegenwart mindestens eines Telogens und/oder Comonomeren und unter Einsatz eines Katalysators nach einem der Ansprüche 1 bis 5 polymerisiert wird.

8. Verfahren nach Anspruch 7, **dadurch gekennzeichnet, dass** dieses kontinuierlich oder diskontinuierlich, vorzugsweise kontinuierlich, mehr bevorzugt in Suspensions- oder Festbettfahrweise, noch mehr bevorzugt in Festbettfahrweise, insbesondere in Sumpffahrweise, durchgeführt wird.

9. Verfahren nach Anspruch 7 oder 8, **dadurch gekennzeichnet, dass** Tetrahydrofuran in Gegenwart von Carbonsäureanhydriden, vorzugsweise Essigsäureanhydrid, zu Polytetrahydrofuran oder Derivaten und Copolymeren davon mit Molekulargewichten von 250 bis 10.000 Dalton, vorzugsweise 50 bis 5000 Dalton, insbesondere 650 bis 4000 DaIton, polymerisiert wird.

## Claims

1. A catalyst for the preparation of polytetrahydrofuran, polytetrahydrofuran copolymers, diesters or monoesters of these polymers by polymerization of tetrahydrofuran in the presence of at least one telogen and/or comonomer, which is in the form of shaped catalyst bodies or catalyst particles having a volume of the individual shape of the body or particle of at least 0.05 mm³, preferably at least 0.2 mm³, in particular 1 mm³, and has both features a) and b):
a) a pore radius distribution having at least one maximum in the pore radius range from 100 to 5000 Å,
b) a pore volume of catalyst pores having radii of 200 - 3000 Å of greater than 0.05 cm³/g and/or a pore volume of pores having radii of 200 - 5000 Å of greater than 0.075 cm³/g and/or a pore volume of pores having radii of > 200 Å of greater than 0.1 cm³/g.

2. A catalyst as claimed in claim 1, wherein 50% of the total pore volume is made up by pores having a diameter of < 0.1 µm.

3. A catalyst as claimed in claim 1 or 2 which is produced from a catalyst precursor in powder form.

4. A catalyst as claimed in any of claims 1 to 3, wherein the catalyst precursor in powder form or the pulverized catalyst has an initial activity of at least 0.5 g of polymer/g of catalyst and hour of reaction time.

5. A catalyst as claimed in any of claims 1 to 4, wherein the active catalyst composition is selected from among sheet silicates, preferably from among sheet silicates of the montmorillonite/saponite group, the kaolin/serpentine group and the palygorskite/sepiolite group, particularly preferably from among montmorillonite, hectorite, kaolin, attapulgite, sepiolite and mixtures thereof.

6. A process for producing a catalyst as claimed in any of claims 1 to 5, wherein the shaped catalyst bodies are produced from pulverulent raw materials by methods known per se, preferably tabletting, agglomeration or extrusion, with auxiliaries, preferably binders, lubricants and/or solvents, being added during shaping, in particular shaping by agglomeration or extrusion in the presence of water as auxiliary.

7. A process for preparing polytetrahydrofuran, polytetrahydrofuran copolymers, diesters or monoesters of these polymers, which comprises polymerizing tetrahydrofuran in the presence of at least one telogen and/or comonomer and using a catalyst as claimed in any of claims 1 to 5.

8. A process as claimed in claim 7 which is carried out continuously or batchwise, preferably continuously, more preferably in the suspension or fixed-bed mode, even more preferably in the fixed-bed mode, in particular in the upflow load.

9. A process as claimed in claim 7 or 8, wherein tetrahydrofuran is polymerized in the presence of carboxylic anhydrides, preferably acetic anhydride, to give polytetrahydrofuran or derivatives and copolymers thereof having molecular weights of from 250 to 10,000 dalton, preferably from 50 to 5000 dalton, in particular from 650 to 4000 dalton.

## Revendications

1. Catalyseur servant à la production de polytétrahydrofurane, de co-polymères de polytétrahydrofurane, de diesters ou de monoesters de ces polymères par polymérisation de tétrahydrofurane en présence d'au moins un agent télogénique et/ou d'un co-monomère, ce catalyseur se présentant sous forme de corpuscules ou de particules de volume au moins égal à 0,05 mm³, de préférence au moins 0,2 mm³, en particulier 1 mm³, et où le catalyseur présente les caractéristiques a) et b).
a) Distribution des rayons de pores comportant au moins un maximum de la distribution des pores dans le domaine compris entre 100-5000 A de rayon de pores,
b) Volume des pores des catalyseurs possédant un rayon compris entre 200-3000 A supérieur à 0,05 cm³/g et/ou possédant un rayon compris entre 200-5000 A supérieur à 0,075 cm³/g et/ou possédant un rayon > 200 A supérieur à 0,1 cm³/g.

2. Catalyseur selon la revendication 1, **caractérisé par le fait que** 50% du volume total des pores est constitué de pores de diamètre < 0,1 µm.

3. Catalyseur selon la revendication 1 ou 2, **caractérisé par le fait qu'**il est obtenu à partir d'un précurseur sous forme de poudre.

4. Catalyseur selon l'une des revendications 1 à 3, **caractérisé par le fait que** le précurseur sous forme de poudre ou pulvérisé présente une activité initiale d'au moins 0,5 g polymère/g catalyseur et par heure en durée de réaction.

5. Catalyseur selon l'une des revendications 1 à 4, où la masse catalytique est sélectionnée parmi des silices stratifiées, de préférence des silices stratifiées du groupe des montmorillonite-saponites, du groupe des kaolins-serpentins ou du groupe des palygorskit-sépiolites, de préférence parmi les montmorillonite, hectorite, kaolin, attapulgite, sépiolite ou des mélanges de ces derniers.

6. Procédé visant à produire un catalyseur selon l'une des revendications 1 à 5, **caractérisé par le fait que** la forme du catalyseur est obtenue à partir de produits initiaux poudreux en faisant appel à des procédés déjà connus, de préférence le pastillage, l'agglomération ou l'extrusion, où la déformation se produit par addition d'adjuvants, de préférence des liants, des lubrifiants et/ou des solvants, en particulier pour la mise en forme par agglomération ou par extrusion en présence d'eau comme adjuvant.

7. Procédé servant à la production de polytétrahydrofurane, de co-polymères de polytétrahydrofurane, de diesters ou de monoesters de ces polymères par polymérisation de tétrahydrofurane en présence d'au moins un agent télogénique et/ou de co-monomères et en utilisant un catalyseur selon l'une des revendications 1 à 5.

8. Procédé selon la revendication 7, **caractérisé par** l'exécution en continu ou en discontinu, de préférence en continu, et préférentiellement par progression dans un milieu en suspension ou dans un lit fixe, plus préférentiellement dans un lit fixe, particulièrement dans des puits liquides.

9. Procédé selon la revendication 7 ou 8, **caractérisé par** la polymérisation de tétrahydrofurane en présence d'anhydrides d'acides carboniques, de préférence d'anhydride d'acide acétique, pour la production de polytétrahydrofurane ou de ses dérivés et co-polymères ayant des poids moléculaires compris entre 250 et 10,000 Dalton, de préférence compris entre 50 et 5000 Dalton, particulièrement compris entre 650 et 4000 Dalton.
